# EUROPEAN PATENT APPLICATION

(11) **EP 1 647 397 A1**
(43) Date of publication of application: **19.04.2006**
(21) Application number: 05103198.7
(22) Date of filing: 20.04.2005
(51) Int. Cl.: B31D 1/02, B32B 38/06

(54) **Method for manufacturing laminar elements and laminar element obtained thereof**

(30) Priority: 12.10.2004 IT MI20041924
(71) Applicant: Corbetta S.r.l., 20050 Verano Brianza (Milano) (IT)
(72) Inventor: Corbetta, Paolo, 20050 Verano Brianza (Milano) (IT)
(74) Representative: Ponzellini, Gianmarco

(57) **Abstract**

It is disclosed a method of manufacturing laminar elements (1) such as stamps or gadgets in which the suitable laminar metal support (2) is continuously unwound from a reel (7); adhesive means and suitable protection elements in the form of a sheet (4) are associated with a lower surface of the laminar support (2). The laminar support (2) is pre-deformed during the step of associating the adhesive means (3) and is then cut out to define a plurality of laminar elements (1) on which a graphic pattern is subsequently created by operating through deformation by cold die-forming of the laminar elements themselves.

## Description

The present invention relates to a laminar element and the related production method.

In particular the laminar elements being the object of the present invention will be preferably but not exclusively intended for use in the philatelic field such as stamps, or for promotional/advertising purposes.

It is known that there are on the market and are often distributed as gadgets, laminar metal elements carrying the representation of an event, a face or in any case an ornamental design and which are adapted to celebrate or remember particular anniversaries or occasions.

In general these gadgets are sold or offered as gifts through different distribution channels such as magazines, shops, stalls or others.

From a manufacturing point of view the laminae or plates of known type are obtained starting from a suitable strip of metal material of the desired thickness that is cut out so that the article of manufacture can take the desired perimetral shape and then a graphic representation is made on one or both surfaces thereof, by means of engraving operations using technologies of the laser type or also by use of colour printing processes obtained by adopting proper and suitable inks.

The laminar elements briefly described above however appeared to be susceptible of improvements under different points of view and in particular with reference to the production process and the technical and structural features of the product.

For instance the production processes by means of laser technologies or by chemical engraving operations have very high costs involving small margins of profit on the sale of the finished product. In addition, the laser and chemical technologies themselves as well as the ink printing processes do not enable particularly apparent tridimensional effects to be obtained on the finished product, neither do they allow achievement of particularly sharp and clear images.

Accordingly, it is an aim of the present invention to first of all make available a new production method enabling products of high quality to be obtained at very reduced costs.

It is a further aim of the invention to provide a method enabling tridimensional effects to be obtained in the representation present on the plate without however reducing the image definition as regards details.

The invention also aims at making available a product involving uses different from those hitherto provided.

The foregoing and further aims that will become more apparent during the following specification are substantially achieved by a laminar element and the related production method in accordance with the appended claims.

Further features and advantages will be best understood from the detailed description of a preferred but not exclusive embodiment of a laminar element and the production method thereof in accordance with the present invention.

This description will be taken hereinafter with reference to the accompanying drawings, given by way of non-limiting example, in which:
- Fig. 1 shows an example of the laminar element in accordance with the invention, in top view;
- Fig. 2 shows the laminar element in accordance with the invention with the film partly stripped off;
- Fig. 3 is a cross-section of the laminar element seen in Fig. 2; and

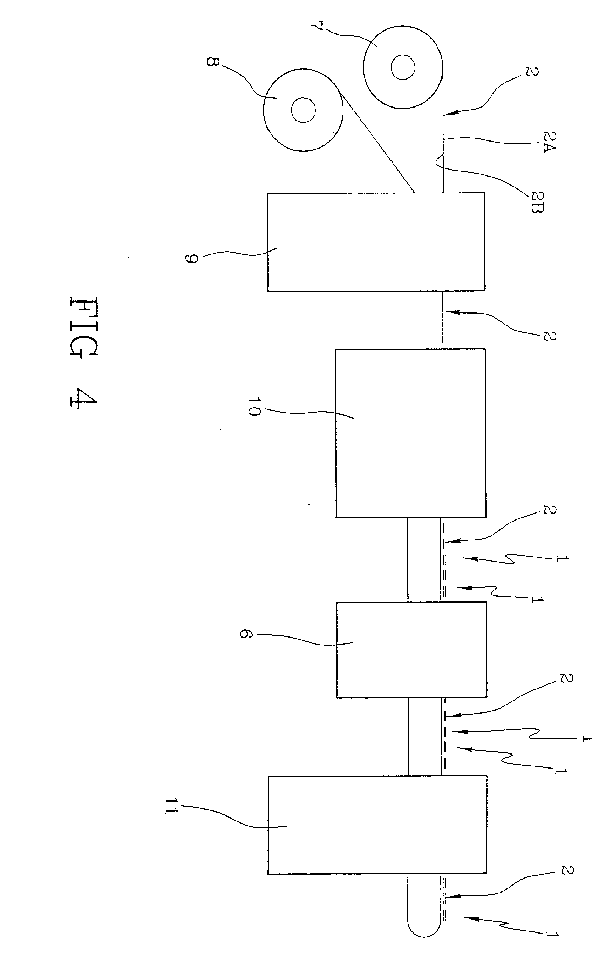

- Fig. 4 diagrammatically shows the different steps of the production process.

With reference to the drawings, a laminar element in accordance with the present invention has been generally identified by reference numeral 1.

In particular, the laminar elements being the object of the present invention will be intended for use in the philatelic field such as legal-tender stamps or also for distribution as gadgets with newspapers, magazines or also books; obviously, these uses are not intended in a limiting sense as every other use or distribution is included within the inventive concept being the object of the invention.

From a structural point of view, the laminar elements 1 first of all comprise a metal lamina or thin plate 2 of suitable thickness generally included between 0.1 and 2 mm and the preferred thickness of which currently corresponds to 0.5 mm. This thin metal plate can be made of different materials but it preferably consists of aluminium, silver or a combination thereof.

In particular, the preferred embodiment contemplates manufacture of laminar elements having a thin metal plate of anodised aluminium in which the anodising step enables the upper surface of the thin metal plate itself to be given the suitable colouring; it will be possible to obtain gold-plated, silver-plated, or differently-plated thin plates, for example.

Obviously, this thin metal plate 2 can have any conformation in plan view in terms both of shape and sizes.

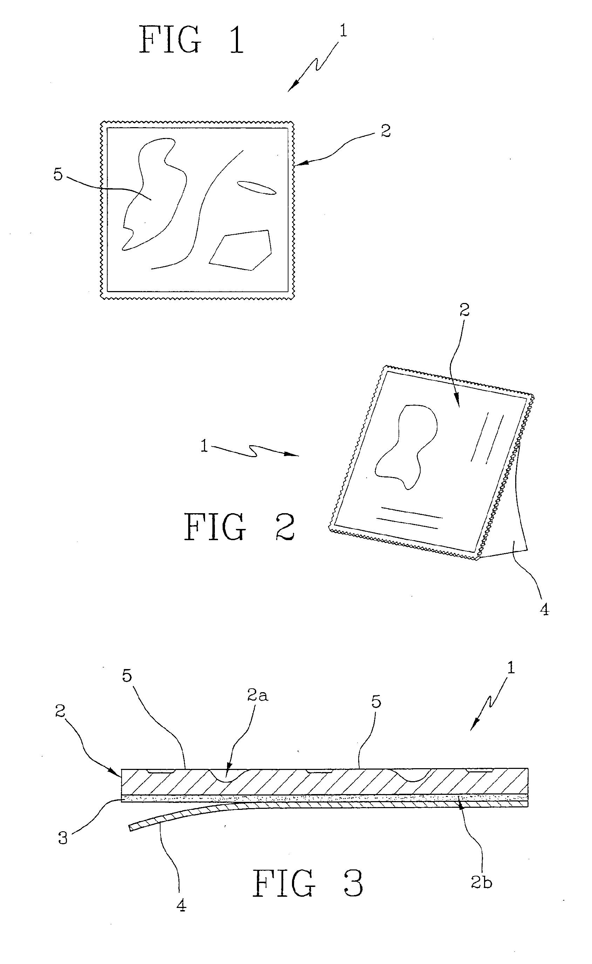

When the laminar element must serve as a stamp, the thin metal plate will for example have a fringed contour and a rectangular or square shape (see Fig. 1). In any case disc-shaped, round or also unevenly-shaped laminar elements can be obtained.

The thin metal plate 2 has a suitable graphic pattern or design on its upper surface 2a, which graphic pattern can consist of ornamental elements and/or inscriptions and/or symbols distributed on such a surface depending on current requirements.

In particular, these graphic patterns 5 will emerge from the upper surface 2a of the thin metal sheet 2 giving the laminar element itself a tridimensional aspect.

Alternatively, said graphic patterns can be obtained by means of printing processes with chemical inks.

Also provided at a lower face 2b of the thin metal plate 2 is the presence of suitable adhesive means 3 consisting of a transparent two-side pressure sensitive film, for example.

A protection element 4 preferably of sheet material, of silicone nature for example, is then positioned to the lower surface of the two-side pressure sensitive film, said protection element covering the adhesive means 3 that is distributed over the whole lower surface of the thin metal plate 2; in the finished product this protection element 4 will in particular have a shape in plan view quite similar to that of the thin metal plate 2.

The above being stated, the production method of the above described laminar elements is the following.

First of all a suitable laminar support 2 is arranged which at least partly consists of metal material. Generally this laminar support 2 is set in the form of fully metallic strips having suitable sizes and thickness and the production method takes place continuously.

The laminar support 2 will generally constitute the previously mentioned thin metal sheet carrying the graphic patterns 5.

In some preferred embodiments, this laminar support 2 either will fully consist of aluminium or silver or will be formed of a bilaminar material made up of an aluminium base and a silver sheet associated therewith on top. Obviously, other alternative embodiments as regards the materials, such as thin plates fully consisting of gold or gold-plated aluminium supports, completely fall within the inventive concept in accordance with the present invention.

The laminar metal support 2 is usually unwound from a suitable strip roll 7 and continuously fed to a first coupling station 9 where adhesive means 3 is associated with a lower surface 2b of this laminar support 2, at least at one portion of said lower surface 2b.

Actually, said adhesive means 3 will preferably consist of a transparent two-side pressure sensitive film that is bonded to the whole lower face 2b of the laminar support 2.

In addition to coupling between the laminar support 2 and adhesive means 3 in this station 9, also a protection film 4 in the form of a silicon-based sheet material is associated with the lower part of the two-side pressure sensitive film 3, on the opposite side from the laminar support 2. In this manner the two-side pressure sensitive material is disposed between the laminar support 2 and the protection element 4. For example, the protection element 4 can be continuously unwound from a suitable reel 8.

It is to be pointed out in this connection that the laminar support 2 is also submitted to a step of pre-deformation capable of causing a deformation in the support 2 from the side 2b on which the adhesive means 3 is laid to the side 2a where the graphic pattern 5 is to be made.

This operation involving pre-deformation is carried out simultaneously with laying of the adhesive means 3 and in particular it is exactly coincident with this step. In other words, exactly during laying of the bilaminar film a suitable pressure is generated on the support 2 thereby obtaining a small deformation of the latter that essentially consists of a camber or convexity towards the side where the graphic pattern 5 will then be made.

At this point the strip 2, in a first embodiment of the process, is caused to move forward towards a cutting-out station 10 in which a predetermined number of said laminar elements 1 are defined. In other words, in the cutting-out station the perimetral shape of the laminar element is defined, as well as the plan shape and sizes of said element.

In this station the different elements that, depending on requirements, will become stamps, gadgets, plates or others are separated. Then, the laminar elements 1 still devoid of any graphic pattern are therefrom sent to the forming or stamping station 6 where the graphic pattern 5 will be made by means of deformation by die forming of the laminar elements. Die forming is in particular a cold operation carried out by use of suitable pressure dies that will be obviously dedicated to the particular object to be made, i.e. the sizes and graphic patterns to be obtained on the laminar support.

Finally, since the die forming step can sometimes involve a deformation of the perimetral edge of the article of manufacture, a further step of new cutting-out intended to again and perfectly define the shape of the product is carried out (station 11).

Actually, through use of particular and more precise and sophisticated die forming equipment the first cutting-out step 10 can be avoided, i.e. forming by deformation is carried out and only subsequently at station 11, a cutting-out operation takes place.

It is apparent that the possibility of adopting this variant depends on the number of articles of manufacture to be made, which number must be high, and on the shape of the products themselves that influences the possibility of executing only one final cutting-out operation.

The invention achieves important advantages.

First of all the method of the invention enables laminar elements provided with tridimensional ornamental patterns to be obtained that are perfectly defined and sharp, at working costs lower than those hitherto borne to make similar articles of manufacture for analogous uses.

In addition to the above, the particular choice of the materials, bonding agents, sizes and thickness enables products of excellent quality to be obtained, while prices are more reduced and therefore adapted for large use. It will be finally recognised that the production method lends itself well to possible modifications as regards the materials used, thickness, shapes to be obtained, and possibly the sequence of some of the production steps themselves.

## Claims

1. A method of manufacturing laminar elements, **characterised in that** it comprises the following steps:
- arranging a suitable laminar support (2) of at least partly metal material;
- associating adhesive means (3) with at least one portion of the laminar support (2);
- associating a protection element (4), preferably in the form of a sheet, with at least said adhesive means (3); and
- creating a graphic pattern (5) on at least part of the laminar support (2), said step of creating the graphic pattern (5) being obtained through deformation by die forming of the laminar support (2) itself.

2. A method as claimed in claim 1, **characterised in that** the laminar support (2) is made of metal material, preferably aluminium or silver, or a bilaminar material with a silver sheet, or a combination of these materials.

3. A method as claimed in anyone of the preceding claims, **characterised in that** the adhesive means (3) is associated with a face (2b) of the laminar support (2) and in particular comprises a preferably transparent two-side pressure sensitive film.

4. Method as claimed in anyone of the preceding claims, **characterised in that** the adhesive means (3) is directly in engagement with one face (2b) alone of the laminar support (2) and **in that** the protection element (4) covers at least all the adhesive means (3).

5. A method as claimed in anyone of the preceding claims, **characterised in that** it further comprises a step of pre-deformation of the laminar support (2).

6. A method as claimed in claim 5, **characterised in that** said step of pre-deformation is of such a nature as to cause a deformation of the laminar support (2) from the side (2b) of laying of the adhesive means (3) to the side (2a) where the graphic pattern (5) is present or will be made.

7. A method as claimed in claim 5, **characterised in that** the steps of pre-deformation and association of the adhesive means (3) are simultaneous and preferably coincident.

8. A method as claimed in anyone of the preceding claims, **characterised in that** it further comprises a step of cutting out the laminar support (2) to define a predetermined number of distinct laminar elements (1).

9. A method as claimed in claim 8, **characterised in that** the cutting-out step comes after the step of associating the adhesive means.

10. A method as claimed in anyone of the preceding claims, **characterised in that** the deformation step by die formation is obtained by a cold operation with use of pressure dies (6).

11. A method as claimed in claim 8, **characterised in that** the deformation step comes after the cutting-out step and is carried out on the laminar elements 1.

12. A method as claimed in anyone of the preceding claims, **characterised in that** it further comprises a step of new cutting out or trimming following the deformation step by die-forming.

13. A laminar element such as a stamp or a gadget, **characterised in that** it comprises:
- a thin metal plate (2);
- adhesive means (3) bonded to at least one portion of the lower surface (2b) of the thin metal plate (2);
- a protection element (4), preferably in the form of a sheet, to cover at least said adhesive means (3); and
- a graphic pattern (5) defined on a surface (2a) of the thin plate opposite to that carrying the adhesive means (3).

14. An element as claimed in claim 13, **characterised in that** the adhesive means (3) comprises a preferably transparent two-side pressure sensitive film.

15. An element as claimed in claim 13, **characterised in that** the thin metal plate (2) comprises aluminium and/or silver and has a thickness in the range of 0.1 to 2 mm, for example.

16. A laminar element as claimed in claim 13, **characterised in that** the protection element (4) is of silicone nature.

17. An element as claimed in claim 13, **characterised in that** the graphic pattern (5) appears raised on the upper surface (2a) of the thin plate (2).

18. An element as claimed in claim 13, **characterised in that** the graphic pattern (5) is defined by suitable chemical inks.
